(19) **Europäisches Patentamt**

**European Patent Office**

**Office européen des brevets**

(11) **EP 1 429 219 A1**

(12) **EUROPEAN PATENT APPLICATION**

(43) Date of publication:
**16.06.2004 Bulletin 2004/25**

(51) Int Cl.⁷: **G05B 23/02**, G05B 17/02, G05B 15/02

(21) Application number: **02406085.7**

(22) Date of filing: **10.12.2002**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(71) Applicant: **ABB RESEARCH LTD.**
**8050 Zürich (CH)**

(72) Inventors:
• **Hovland, Geir**
  **5408 Ennetbaden (CH)**
• **Gallestey Alvarez, Eduardo**
  **5522 Tägerig (CH)**

• **Stother, Alec**
  **5408 Ennetbaden (CH)**
• **Morton, Steve**
  **8166 Niederweningen (CH)**
• **Antoine, Marc**
  **5412 Gebenstorf (CH)**

(74) Representative: **ABB Patent Attorneys**
  **c/o ABB Schweiz AG,**
  **Intellectual Property (CH-LC/IP),**
  **Brown Boveri Strasse 6**
  **5400 Baden (CH)**

(54) **Design of thick-walled components for power plants from crack-growth models**

(57)    In a method and a computer program product for designing a component for an industrial plant, in particular a thick-walled component for a power plant, by means of an iteration, in which the steps of

• computing a plurality of process variables by means of a process simulator;

• modelling growth of at least one hypothetical crack in the component, based on a structure of the component and the process variables;

• computing a life expectancy for the component by determining a time required for a dimension of the hypothetical crack to exceed a given critical limit;

• modifying the structure of the component;

are repeated until the time required for the crack dimension to exceed the given critical limit fulfils a pre-determined requirement, a time dependent load-profile and a dynamic process simulator capable of modelling transient process behaviour is used to compute the process variables.

Fig. 1

## Description

### Technical Field

The invention relates to the field of power plant design. It relates in particular to an iterative method and a computer program product for designing components for industrial plants, in particular thick-walled components for power plants, as claimed in the precharacterizing clause of claim 1.

### Prior Art

Thick-walled components appear frequently in power plants, for example as tubing for superheaters, reheaters, economizers and as coolers, drums, rotors, turbine and compressor blades and casings. Typical component design approaches take conditions such as static water/steam flows, static operating temperatures and static stresses into account in a steel selection. In one common design approach, thick-walled components for power plants are normally designed to last a given number of hours at a given full load. Full-load equivalent-operating-hours (FLEOH) for each component, e.g. in a boiler, are determined by means of look-up tables which are widely available to persons skilled in the art. To find a component's FLEOH, both steady-state full-load temperature and steady-state full-load stress the component is subject to under steady-state full-load conditions are required, as are material properties, e.g. steel type, of the component. When applying this approach, stronger materials will typically be chosen for tubes and welds in superheated parts of a boiler when designing the power plant, thus providing such components with FLEOHs similar to tubes and welds in low temperature regions. The FLEOH number for a component corresponds to a life expectancy of that component when constantly subjected to the steady-state full-load temperature and the steady-state full-load stress. If values for temperature and stress during operation exceed steady-state full-load values assumed when designing the component, the life expectancy of the component will decrease, or, in other words, ageing of the component will be accelerated. As a consequence, the component will fail earlier than expected.

The FLEOH approach is conservative. In general, a power plant will not be operated at full-load at every given moment of its lifetime. An alternative approach is to use load-dependent equivalent-operating-hours (EOH). The EOH is an average estimate of a component's life expectancy based on typical load profiles and typical numbers of start-up and shutdown sequences that occur during a components lifetime. As a result, a more accurate estimate of the life expectancy is achieved and a less conservative design is possible.

In both approaches, however, to ensure that components do not fail unduly, harsher conditions than the ones that the components will finally be subjected to are assumed when designing said components. This leads to more or less over-dimensioned components, with, in general, thicker walls, larger diameters, materials and welds of higher quality, etc., than would actually be required. This, in turn, leads to higher costs in building corresponding plants, namely because of increased material consumption, higher transportation costs due to increased weight of the components, more difficult handling, etc.

### Description of the Invention

It is an objective of the invention presented herein to provide a method and a computer program product of the type mentioned initially that permits a design of components for industrial plants, in particular thick walled components for power plants, that avoids over-dimensioning.

This object is achieved by the method and the computer program product as claimed in the independent claims. In an iteration method for designing a component, in particular a thick-walled component, of a power plant according to claim 1, a dynamic simulation of process variables is used as the basis for a crack-growth simulation. The process variables are computed by means of a process simulator for a given, time-dependent load profile. According to the invention, the load profile is time-dependent and the process simulator is capable of taking into account transient behaviour as it occurs e.g. during start-ups, shutdowns or load changes, so that the computed process variables are also time-dependent. This has the advantage that components can be designed in such a way that their life expectancy under realistic operating conditions accurately matches a desired value.

Further advantageous realizations can be found in the dependent claims.

### Brief Explanation of the Figures

The invention will be explained in more detail in the following text with reference to exemplary realizations and in conjunction with the figures, in which:

Fig. 1 shows a potential location and geometry of a crack in a turbine blade,

Fig. 2 shows a cross section of a pipe, with an example of a crack growth geometry.

The reference signs used in the figures are explained in the list of reference signs.

### Detailed description of preferred embodiments

Starting point for the method according to the invention is an initial structure of a component, in particular a thick-walled component, said component forming part of a power plant, which in turn is characterized by an initial structure, wherein the initial structure of the component is comprised in the initial structure of the power plant. The word "structure" in this context refers to a physical, geometrical and material constitution of the component and the power plant, respectively, and comprises shapes, dimensions, steel composition, weld materials, etc. For example, a combined cycle power plant comprises a gas turbine, a heat recovery steam generator, and a steam turbine. The steam turbine comprises a plurality of thick-walled components such as a rotor, a number of pipes, a casing, a number of turbine blades, and a number of vanes. Each component is described by process dynamics, geometrical dimensions and material characteristics. In addition to the gas and steam turbines and the heat exchanger, a power plant may comprise further components, e.g. a compressor, a condenser, a feed water tank, a deaerator, coolers and several pumps.

In what follows, the component need not necessarily consist of a single part, but may be a composite component comprising a number of parts that are joined together, e.g. by a weld. In this manner, joints like welds can easily be included in the design process. This is important since many failures encountered in heavy-section piping occur at welded joints. Hence, not only the components base material, but also the weld regions require sufficient attention when designing power plants.

In a first step, a response of the steam turbine and/or the gas turbine to a time-dependent load profile is modelled by means of a process simulator. For the steam turbine, for example, elements such as rotor dynamics, steam temperatures, and pressure distributions within the steam turbine are taken into account in a simulation. A corresponding modelling methodology is well-known to a person skilled in the art of power plant modelling, and is, for example, described in detail in the book "Thermische Turbomaschinen" by Walter Traupel, published by Springer, Berlin, 1988, which will be referred to as Traupel in what follows. Implementation of the modelling methodology into a process simulator in turn is straightforward to a person skilled in the art of computer programming. Preferably, rotor dynamics, thermodynamic behaviour of pipes 4, and thermodynamic behaviour of steam within the turbine are taken into account in the simulation. From the process simulation, a plurality of process variables will result, comprising, but not limited to, densities, temperature distributions, pressures and/or velocities of steam and/or fluids. For the gas turbine, pressure, density, velocity of the gas in a high and/or a low-pressure section of the gas turbine, pressure, density, enthalpy may, for example, be obtained by means of the process simulation. Temperatures of steam, water and air in a heat recovery steam generator may also be simulated.

The following mass balance equations are typically used to model the mass flow in a pipe,

$$Vol^{pipei}\, \frac{d\rho^{pipei}}{dt} = flow_{in}^{pipei} - flow_{out}^{pipei},$$

$$flow_{out}^{pipei} = c^{pipei}\, \rho^{pipei}\, p^{pipei}\, \sqrt{1 - (p_{out}/p^{pipei})^{\frac{n+1}{n}}},$$

$$p^{pipei} = z(p^{pipei}, T_{in}^{pipei})R\, \rho^{pipei}\, T_{in}^{pipei}.$$

where $\rho$ is the density, $p$ the pressure, and the remaining variables are component specific constants. Similar equations can be written for energy balances and used for turbine and heat exchanger models.

In a second step, stress exerted onto the component will be computed. The following types of stress are taken into account:

• Tension stress due to centrifugal forces: pure tension due to the combination of rotor rotation and the blades own weight, for example computed using essentially the following formula:

$$\sigma_c(r^*) = \frac{\rho_{blade}\, w^2}{area(r^*)} \int\limits_{r*}^{r_{max}} area(r)\, r\, dr\, ,$$

where $\sigma$ is the tension stress, $\omega$ a rotational velocity, and $\rho$ a component density.

• Bending stress due to pressure gradients, for example computed using a formula taking into account axial and longitudinal bending moments as described in Traupel.

• Thermal stress due to temperature gradients within the blade, for example computed using essentially the following formula:

$$\frac{\partial^2 \Phi}{\partial r^2} + \frac{1}{r}\frac{\partial \Phi}{\partial r} + \frac{\partial^2 \Phi}{\partial z^2} = \frac{1+v_R}{1-v_R}\beta(T_R - \overset{*}{T_R})\, ,$$

where $\phi$ is the stress potential, $T_R$ the temperature, $T_R^*$ a mean temperature, and $z$ and $r$ polar coordinates of the component.

• Dynamic stress due to fast oscillations of process variables caused by flow fluctuations and/or excited eigenfrequencies. This type of stress is especially important during start-ups, shutdowns and load changes. For example pipe stresses are directly proportional to internal pressures that vary dynamically. Similarly as can be seen from the above mentioned stress formulas, thermal and bending stresses are directly related to process variables such as temperature and pressure that also vary dynamically.

Computational procedures for modeling the various stress types are again known to a person skilled in the art of power plant modelling, and are once more described in Traupel.

In a third step, a life expectancy of the component is determined for the given load profile. For this purpose, a hypothetical crack is introduced in the component, and a growth with time of said hypothetical crack is modelled by means of a crack-growth simulator. The hypothetical crack reflects the fact that, even when out-of-the-box new, the component has a number of microscopic or minimal cracks. In addition, it is further assumed that each component has a critical crack length. The life expectancy is the time it takes for the hypothetical crack to reach the critical length. Depending on the type of stress a component is subject to, different models are used to simulate crack growth. For stresses that are approximately constant in time, creep crack growth models are applied. A typical creep crack growth model is given by $\frac{da}{dt} = \gamma (C_t)^m$, where $a$ is the crack length, $C_t$ a so-called crack tip parameter that depends on the component geometry and applied stress, $\gamma$ a material creep constant, and $m \approx n/(n+1)$ another constant with $n$ being the Norton exponential constant. For stresses that are at least approximately cyclic, fatigue crack growth models are used. A typically used fatigue crack growth model is given by

$$\frac{da}{dN} = \frac{C(\max(\Delta K - K_{th}, 0)^{nfatigue}}{\frac{K_{crit}}{K_{max}} - 1},$$

where $\Delta K$ is the amplitude of the stress cycle, a the crack length and $N$ the number of cycles and the remaining variables are component specific constants.

The respective models are well-known to a person skilled in the art of mechanical engineering, and are e.g. described in the books "Fracture Mechanics: Fundamentals and Applications", by T. Anderson, CRC Press, 2nd ed., Cleveland, Ohio, 1995; "Advanced Fracture Mechanics" by M. Kanninen and C. Popelar, Oxford University Press, New York, 1985; "Non-linear Fracture Mechanics for Engineers", by A. Saxena, CRC Press, Cleveland, Ohio, 1998; and "Damage Mechanics and Life Assessment of High-Temperature Components" by R. Vishwanathan, ASM International, Ohio, 1989. Implementation of the modelling methodology into a crack-growth simulator is again straightforward to a person skilled in the art of computer programming.

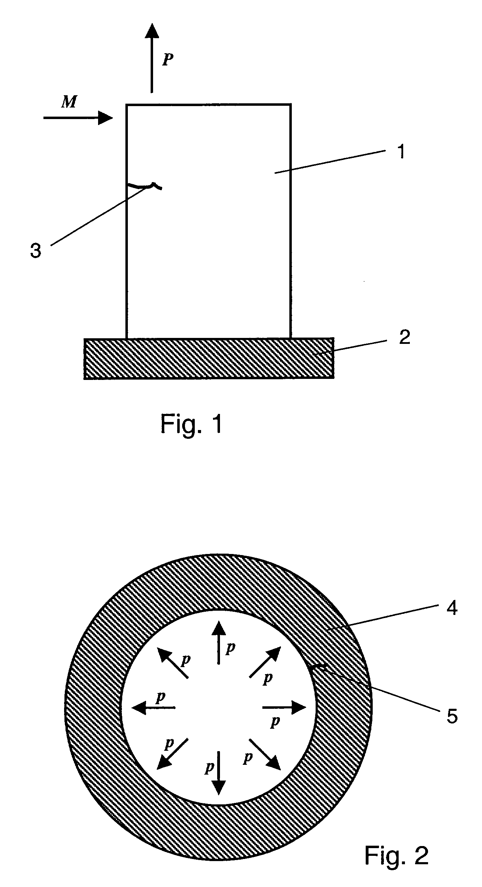

To further illustrate how the crack growth simulations may be carried out, Fig. 1 shows a potential location and geometry of a crack 3 that has been growing for some time in a turbine blade 1, said turbine blade 1 being fixed to a rotor 2. When the turbine is in operation, the blade 1 is subject to a tension **P** and a bending moment **M,** which are indicated by arrows. Fig. 2 shows a cross section of a pipe 4, with an example of a crack growth geometry for a crack 5 that has been growing for some time in a radial direction of the pipe 4. The pipe 4 is subject to an internal pressure **p** exerted by flow of gas through the pipe 4.

The life expectancy of the component obtained from the crack-growth simulation is then compared to a given, desired value. If the life expectancy of the component obtained from the crack-growth simulation is shorter than the desired value, the structure of the component is modified, and the computation of stress as described in the second step above and the determination of the life expectancy by simulation of crack-growth as described in the third step above, respectively, are repeated with the new, modified structure of the component. This process is continued in an iterative manner until the life expectancy exceeds the desired value.

If the life expectancy is longer than the desired value, the component can be used as is, i.e. the structure of the component does not require further modification. This requirement is already fulfilled after the 0-th iteration if the life expectancy obtained with the initial structure of the component is longer than the desired value. In such cases, the initial structure need not be modified.

In a preferred variation of the method, the structure is parameterized by means of at least one structural parameter, preferably a plurality of structural parameters. Structural parameters may refer to an inner or outer diameter of a tube, a wall thickness of a casing, a blade/vane height, width, or cord, a rotor mass, structural interconnections, a material composition, in particular a ratio of a certain substance in a composite or an alloy, a material tempering, etc. In the iterative process, the structure of the component is preferably modified by modifying one or more of the structural parameters.

In another preferred variation of the method, instead of comparing the life expectancy to a given, desired value, it is checked whether the life expectancy falls into a given interval. By applying this variation of the method to a number of components that constitute a subunit of the steam turbine, it can be assured that all components in this subunit have the same life expectancy. This is of particular advantage for subunits that are regularly replaced, as it ensures that no components with a large remaining life expectancy are replaced unduly if all components in the subunit are provided with approximately the same life expectancy, i.e. within an interval that is small compared to the life expectancy.

In another preferred variation of the method, not only the computation of stress and the determination of the life expectancy are repeated after each modification of the structure of the component in each iteration, but also the process variables are re-computed by means of the process simulator whenever the structure of the component has changed significantly since a previous computation of the process variables. If the structure is parameterized, a significant change can advantageously be defined by specifying for each parameter an allowable relative change, beyond which a corresponding change in the structure has to be regarded as significant.

In another preferred variation of the method, the process variables are re-computed by means of the process simulator in each step of the iteration, i.e. after each modification of the structure of the component.

A computer program product according to the invention comprises a computer readable medium, having thereon computer program code means that, when loaded onto a computer, make said computer execute the method or any of the preferred variations as described above in this section.

**List of Reference Signs**

1 Turbine blade
2 Turbine rotor
3 Crack in turbine blade
*P* Tension
*M* Bending moment
4 Pipe
5 Crack in pipe
*p* Internal pressure

**Claims**

1. A method for designing a component for an industrial plant, in particular a thick-walled component for a power plant, by means of an iteration comprising the steps of

   a) computing a plurality of process variables by means of a process simulator,

   b) modelling growth of at least one hypothetical crack in the component, based on a structure of the component and the process variables,

   c) computing a life expectancy for the component by determining a time required for a dimension of the hypothetical crack to exceed a given critical limit,

   d) modifying the structure of the component,

   e) repeating steps b) through d) until the time required for the crack dimension to exceed the given critical limit fulfils a pre-determined requirement,

**characterized in that**

   - a time dependent load-profile and

   - a dynamic process simulator capable of modelling transient process behaviour is used to compute the process variables.

2. The method as claimed in claim 1, **characterized in that**

   - the process variables are re-computed by means of the process simulator each time the structure has been modified.

3. The method as claimed in one of the previous claims, **characterized in that**

   - stress exerted onto the component is computed from some or all of the process variables and
   - is used as a driving force in modelling the growth of the at least one hypothetical crack.

4. The method as claimed in one of the previous claims, **characterized in that**

   - growth with time of a length a of the at least one hypothetical crack is modelled as creep crack growth according to $\frac{da}{dt} = \gamma(C_t)^m$, where $C_t$ a is crack tip parameter that depends on the component geometry and a stress exerted on the component, $\gamma$ a material creep constant, and $m$ a component specific constant.

5. The method as claimed in one of the previous claims, **characterized in that**

   - growth per cycle of a length a of the at least one hypothetical crack is modelled as fatigue crack growth model according to

$$\frac{da}{dN} = \frac{C(\max(\Delta K - K_{th}, 0)^{nfatigue}}{\frac{K_{crit}}{K_{max}} - 1},$$

   where $\Delta K$ is an amplitude of a stress cycle, $N$ the number of cycles and the remaining variables are component specific constants.

6. The method as claimed in one of the previous claims, **characterized in that**

   - the load profile contains at least one start-up or at least one shut-down of the power plant or

7. The method as claimed in one of the previous claims, **characterized in that**

- the load profile contains a plurality of load changes.

8. The method as claimed in one of the previous claims, **characterized in that**

   - the structure of the component is modified by modifying its material constitution or by modifying weld materials comprised by the structure.

9. The method as claimed in one of the previous claims, **characterized in that**

   - the computation of the plurality of transient process variables by means of the process simulator comprises a computation of tube temperatures and stress.

10. A computer program product comprising a computer readable medium, having thereon: computer program code means that, when loaded onto a computer, make said computer execute the method according to one of the claims 1 through 8.

Fig. 1

Fig. 2

European Patent
Office

**EUROPEAN SEARCH REPORT**

Application Number

EP 02 40 6085

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 377 116 A (ZIMMERMAN CHARLES E ET AL) 27 December 1994 (1994-12-27) * column 15, line 3 - column 16, line 59 * * column 21, line 45 - column 22, line 27 * | 1 | G05B23/02 G05B17/02 G05B15/02 |
| A | US 5 455 777 A (FUJIYAMA KAZUNARI ET AL) 3 October 1995 (1995-10-03) * figures 4A-4B * | 1 | |
| A | EP 1 217 189 A (HITACHI LTD) 26 June 2002 (2002-06-26) * figure 7 * | 1 | |
| A | WO 02 47313 A (VEXTEC CORP) 13 June 2002 (2002-06-13) * figures 3D-4 * | 1 | |
| A | US 6 226 597 B1 (HAO BEILENE ET AL) 1 May 2001 (2001-05-01) * figure 3 * | 1 | TECHNICAL FIELDS SEARCHED (Int.Cl.7) |
| A | US 2001/053965 A1 (MUI JENNY Y ET AL) 20 December 2001 (2001-12-20) * figure 1 * | 1 | G05B |
| A | US 5 202 837 A (COE CARLOS J ET AL) 13 April 1993 (1993-04-13) | | |

The present search report has been drawn up for all claims

| Place of search | Date of completion of the search | Examiner |
|---|---|---|
| THE HAGUE | 28 April 2003 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 02 40 6085

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2003

| Patent document cited in search report | | Publication date | Patent family member(s) | | Publication date |
|---|---|---|---|---|---|
| US 5377116 | A | 27-12-1994 | AU | 656406 B2 | 02-02-1995 |
| | | | AU | 2261192 A | 11-02-1993 |
| | | | BR | 9206234 A | 22-11-1994 |
| | | | CA | 2112575 A1 | 21-01-1993 |
| | | | DE | 69218943 D1 | 15-05-1997 |
| | | | DE | 69218943 T2 | 20-11-1997 |
| | | | EP | 0592541 A1 | 20-04-1994 |
| | | | IL | 102276 A | 31-10-1996 |
| | | | JP | 7501410 T | 09-02-1995 |
| | | | JP | 3174055 B2 | 11-06-2001 |
| | | | MX | 9203829 A1 | 01-11-1992 |
| | | | WO | 9301537 A1 | 21-01-1993 |
| US 5455777 | A | 03-10-1995 | JP | 3186866 B2 | 11-07-2001 |
| | | | JP | 6180281 A | 28-06-1994 |
| EP 1217189 | A | 26-06-2002 | WO | 0123725 A1 | 05-04-2001 |
| | | | CA | 2365301 A1 | 05-04-2001 |
| | | | EP | 1217189 A1 | 26-06-2002 |
| WO 0247313 | A | 13-06-2002 | AU | 4340302 A | 18-06-2002 |
| | | | WO | 0247313 A2 | 13-06-2002 |
| US 6226597 | B1 | 01-05-2001 | CN | 1238848 A | 15-12-1999 |
| | | | EP | 1010114 A1 | 21-06-2000 |
| | | | JP | 2001507144 T | 29-05-2001 |
| | | | WO | 9824042 A1 | 04-06-1998 |
| US 2001053965 | A1 | 20-12-2001 | EP | 1228511 A2 | 07-08-2002 |
| | | | WO | 0197232 A2 | 20-12-2001 |
| US 5202837 | A | 13-04-1993 | US | 5136497 A | 04-08-1992 |

EPO FORM P0459

For more details about this annex : see Official Journal of the European Patent Office, No. 12/82